# EUROPÄISCHE PATENTSCHRIFT

(11) **EP 1 581 086 B1**
(45) Veröffentlichungstag und Bekanntmachung des Hinweises auf die Patenterteilung: **26.07.2006**
(21) Anmeldenummer: 03795914.5
(22) Anmeldetag: 18.12.2003
(51) Int. Cl.: A47J 43/08

(54) **KÜCHENGERÄT MIT EINER ABDECKUNG**
KITCHEN APPLIANCE COMPRISING A LID
USTENSILE DE CUISINE DOTE D'UN COUVERCLE

(30) Priorität: 30.12.2002 DE 10261370
(43) Veröffentlichungstag der Anmeldung: 05.10.2005
(73) Patentinhaber: BSH Bosch und Siemens Hausgeräte GmbH, 81739 München (DE)
(72) Erfinder: PAVLOVIC, Henrik, Ljubno ob Savin 3333 (SI); SEDOVSEK, Aleksander, 3330 Mozirje (SI); SEMEJA, Uros, 3327 Smartno ob Paki (SI); ZIBRET, Igor, 3327 Smartno ob Paki (SI)
(86) Internationale Anmeldenummer: PCT/EP2003/014468
(87) Internationale Veröffentlichungsnummer: WO 2004/058022

(56) Entgegenhaltungen:
- DE-A- 1 945 286
- DE-C- 970 577

## Beschreibung

Die Erfindung betrifft ein Küchengerät mit den im Oberbegriff des Patentanspruchs 1 genannten Merkmalen.

Küchengeräte benötigen oftmals eine Kühleinrichtung. Für kleinere Geräte kommt vorwiegend eine Luftkühlung mittels einer Kühlluftströmung in Frage, die auf einfache Weise durch einen vom Antriebsmotor betriebenen Ventilator erzeugt werden kann. Für eine effektive Kühlluftführung ist ein Lufteinlass und ein Luftauslass notwendig, die typischerweise jeweils an gegenüber liegenden Seiten eines Gehäuses angeordnet sind. Ein Beispiel für ein derartiges motorbetriebenes Küchengerät ist eine Mischzerkleinerungsvorrichtung für den Haushalt. Diese weist typischerweise ein Motorgehäuse mit einem elektrischen Antriebsmotor und einen auf eine Oberseite des Gehäuses aufsetzbaren Becher auf, in dessen unterem Bereich eine Werkzeugwelle um eine vertikale Achse rotieren kann. Der unten offene Becher kann normalerweise mitsamt einem Becherträger vom Gehäuse abgenommen werden, um den darin zuvor zerkleinerten und/oder fein durchmischten Inhalt in ein Gefäß entleeren zu können.

Es sind Kühleinrichtungen bekannt, um die im Antriebsmotor einer Mischzerkleinerungsvorrichtung bei länger andauerndem Betrieb entstehende Verlustwärme abzuführen. So zeigt die DE 17 78 820 C3 eine gattungsgemäße Misch- und Zerkleinerungsvorrichtung für den Haushalt, die ein Gehäuse mit einem darin angeordneten Antriebsmotor und einer von diesem betriebenen, vertikal innerhalb eines Behälters rotierenden Messerwelle aufweist. Ein unterer Wellenstumpf des Motors ist mit einem Lüfterflügel versehen, der die im Gehäuse entstehende Verlustwärme durch Öffnungen im Gehäuseboden nach außen führt.

Eine Aufgabe der vorliegenden Erfindung besteht darin, bei einem motorbetriebenem elektrischen Gerät, insbesondere bei einer gattungsgemäßen Mischzerkleinerungsvorrichtung die Kühlung von sich im Betrieb erwärmenden Geräteteilen zu verbessern.

Diese Aufgabe wird bei einem elektrischen Gerät mit den im Patentanspruch 1 genannten Merkmalen dadurch gelöst, dass eine Abdeckung vorgesehen ist, die eine offene Stellung einnehmen kann, in der die Öffnung offen ist, und die eine geschlossene Stellung einnehmen kann, in der die Öffnung geschlossen ist, und dass die Abdeckung durch das in Einkuppeln der Antriebskupplung mit der Abtriebskupplung in die offene Stellung bringbar ist. Gegenüber herkömmlichen luftgekühlten elektrischen Geräten mit reiner Motorkühlung wird bei dem erfindungsgemäßen Gerät zusätzlich eine Wellenlagerung und/oder eine zwischen Werkzeugwelle und Abtriebswelle des Antriebsmotors angeordnete Kupplung gekühlt. Da eine solche axial trennbare Kupplung normalerweise eine gewisse materialbedingte Elastizität aufweist, entsteht durch Walkarbeit Wärme, welche die Lebensdauer beeinträchtigen und die durch eine gezielte Luftführung effektiv abgeführt werden kann. Ebenso kann sich bei einer gleitgelagerten Werkzeugwelle bei länger dauerndem Betrieb Wärme entwickeln, die durch die einseitige Kapselung der Lagerung relativ schlecht abgeführt werden kann. Durch die erfindungsgemäße gezielte Luftkühlung auch dieser Lagerung kann deren Lebensdauer erhöht werden. Die Erfindung sieht vor, dass der Lufteinlass an der Gehäuseoberseite verschließbar ist. Dies kann insbesondere durch einen Mechanismus erfolgen, der bei abgenommener Werkzeugwelle eine obere Gehäuseöffnung zwischen Lagerung der Werkzeugwelle und Antriebsmotor verschließt. Hierdurch wird bei abgenommenem Becher das Eindringen von Schmutz und/oder Feuchtigkeit durch den oberen Lufteinlass verhindert.

Eine Ausführungsform der Erfindung sieht vor, dass die Abdeckung durch eine Feder in der geschlossenen Stellung vorgespannt gehalten wird. Hierdurch kann sichergestellt werden, dass die Abdeckung durch die Federkraft geschlossen gehalten wird, sobald die Werkzeugwelle vom Gehäuse abgenommen ist.

Vorzugsweise ist durch die Kraft der Feder die Antriebskupplung in eine gegenüber der Abtriebskupplung ausgekuppelte Stellung bringbar. Dadurch kann sichergestellt werden, dass die Werkzeugwelle sich nicht mehr drehen kann, sobald sie vom Gehäuse abgenommen ist.

Die Abdeckung sorgt in der geschlossenen Stellung für eine Abdeckung der Abtriebskupplung, so dass keine Fremdkörper, Schmutz oder Feuchtigkeit in das Gehäuse eindringen können.

Weiterhin kann vorgesehen sein, dass in geöffneter Stellung der Abdeckung der Kühlluftkanal zum Leiten von Kühlluft für den Antriebsmotor und/oder die Kupplung und /oder die Wellenlagerung freigegeben wird, so dass die genannten Teile während des Betriebs optimal gekühlt werden können.

Eine Ausgestaltung der Erfindung sieht vor, dass die Öffnung benachbart zur Abtriebskupplung angeordnet ist. Damit kann erreicht werden, dass die Kupplung unmittelbar dem Kühlluftstrom ausgesetzt ist, sobald sich die Werkzeugwelle dreht.

Eine weitere Ausführungsform der Erfindung sieht vor, dass am Antriebsmotor ein Ventilator angeordnet ist, der einen Kühlluftstrom durch den Kühlluftkanal erzeugt. Hierzu kann der Ventilator in vorteilhafter Weise direkt mit der Motorwelle gekoppelt sein. Insbesondere kann er auf einen Wellenstumpf der Abtriebswelle aufgesetzt sein, so dass der Lüfterflügel mit der Motordrehzahl rotiert und für eine effektive Kühlung sorgen kann. Die Ausgestaltung der Flügel sowie deren Anzahl und Größe kann den Luftdurchsatz bei bekannter Motordrehzahl definieren. Eine bevorzugte Position des Lüfterflügels kann auf einer der Messerwelle gegenüber liegenden unteren Seite des Antriebsmotors sein, wo er in Platz sparender Weise untergebracht werden kann. Typischerweise ist der untere Wellenstumpf ohnehin aus dem Motor herausgeführt und mit einem Lager versehen, so dass der Lüfterflügel problemlos zwischen Motor und Gehäuselagerung untergebracht werden kann.

Vorzugsweise hat der Kühlluftkanal einen Spalt zwischen einem Bodenabschnitt des Bechers und Gehäuse, und eine zur Öffnung entfernte zusätzliche Öffnung im Gehäuse. Die Kühlluft tritt vorzugsweise am Spalt ein, wird am Wellenlager und an der Kupplung vorbeigeführt, tritt über die Öffnung ins Innere des Gehäuses ein, strömt durch den Antriebsmotor und tritt über die zusätzliche Öffnung wieder aus dem Gehäuse aus. Damit wird eine effektive Kühlung aller sich im Betrieb erwärmenden Teile des Küchengeräts sichergestellt.

Vorzugsweise hat der Becher einen Becherträger und einen das Wellenlager tragenden Lagerschild, wobei der Becherträger über eine Verschlusseinrichtung, bevorzugt einen Bajonettverschluss am Gehäuse montierbar ist. Der Lagerschild kann somit einfach fixiert werden, so dass die darin gelagerte Werkzeugwelle stabil im Gehäuse gelagert ist.

Weiterhin kann vorgesehen sein, dass der Becher am Becherträger über eine Verbindungseinrichtung, bevorzugt ein Gewinde, montierbar ist und bei auf dem Becherträger montiertem Becher zwischen dem Becher und dem Becherträger der Lagerschild angeordnet ist. Der Lagerschild und damit die Werkzeugwelle sind somit stabil gelagert.

Eine Ausgestaltung der Erfindung sieht vor, dass bei am Gehäuse montiertem Becherträger und nicht am Becherträger montiertem Becher der Lagerschild mit Lagerwelle und der Antriebskupplung mittels der vorgespannten Abdeckung derart bewegt wird, dass die Antriebskupplung von der Abtriebskupplung entkuppelt wird. Somit sorgt das Abnehmen des Bechers vom Becherträger für ein Öffnen der Kupplung und dafür, dass sich die frei liegende Werkzeugwelle nicht drehen kann.

Vorzugsweise ist zwischen dem Gehäuse und der Abtriebskupplung ein ringförmiger Spalt ausgebildet. Vorzugsweise ist die Abdeckung ringförmig ausgebildet und in dem ringförmigen Spalt koaxial zur Abtriebskupplung von der geschlossenen Stellung in die geöffnete Stellung linear hin und her beweglich. Vorzugsweise ist weiterhin vorgesehen, dass die Abdeckung in der geschlossenen Stellung einen Anschlag hat und bündig zum benachbarten Gehäuseabschnitt und/oder zum stimseitigen Ende der Abtriebskupplung positioniert ist. Die Abdeckung sorgt somit bei abgenommenem Becher und/oder Becherträger für ein Verschließen des Spalts und dafür, dass kein Schmutz oder Feuchtigkeit eindringen können.

Weitere Aspekte und vorteilhafte Weiterbildungen der Erfindung ergeben sich aus den abhängigen Ansprüchen sowie aus der nachfolgenden Figurenbeschreibung.

Nachstehend wird die Erfindung anhand eines Ausführungsbeispiel unter Bezugnahme auf die beiliegenden Zeichnungen näher erläutert. Dabei zeigt:
- Figur 1: eine schematische Schnittdarstellung eines beispielhaften Küchengeräts,
- Figur 2: einen Detailschnitt des Küchengeräts entsprechend Figur 1 mit aufgesetztem Becher,
- Figur 3: eine Detailansicht einer Aufnahme für einen Becherträger des Bechers mit freiliegender Abtriebswelle,
- Figur 4: einen Detailschnitt eines Gehäuses des Geräts mit darin verlaufender Kühlluftströmung,
- Figur 5: einen Detailschnitt entsprechend Figur 2 mit abgenommenem Becher,
- Figur 6: einen weiteren Detailschnitt eines oberen Bereichs des Küchengeräts mit verschlossenen oberen Lufteinlässen und
- Figur 7: eine weitere Detailansicht der Aufnahme für den Becherträger mit weitgehend bündig abgeschirmter Abtriebswelle.

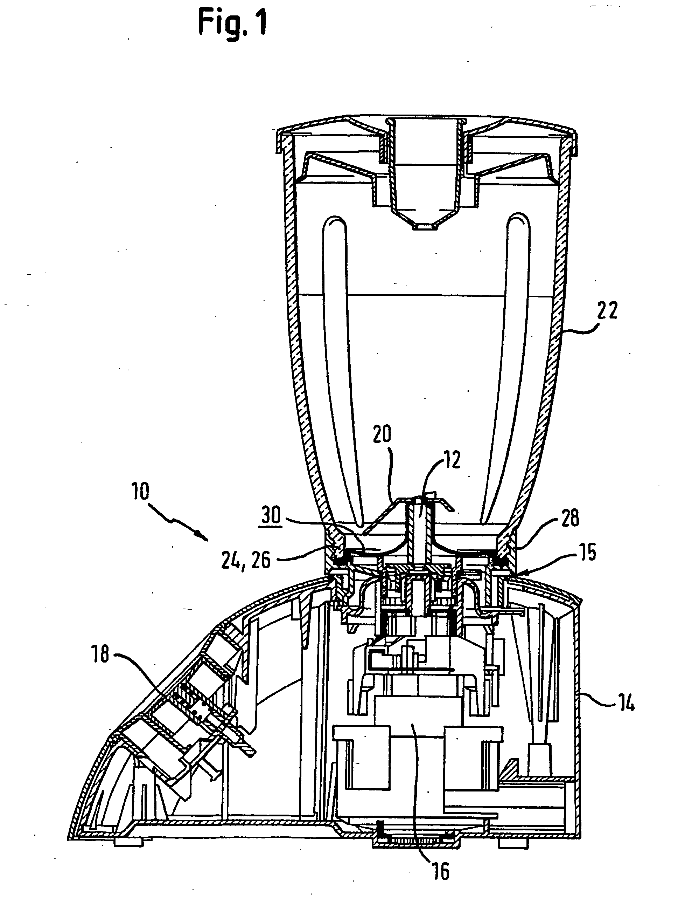

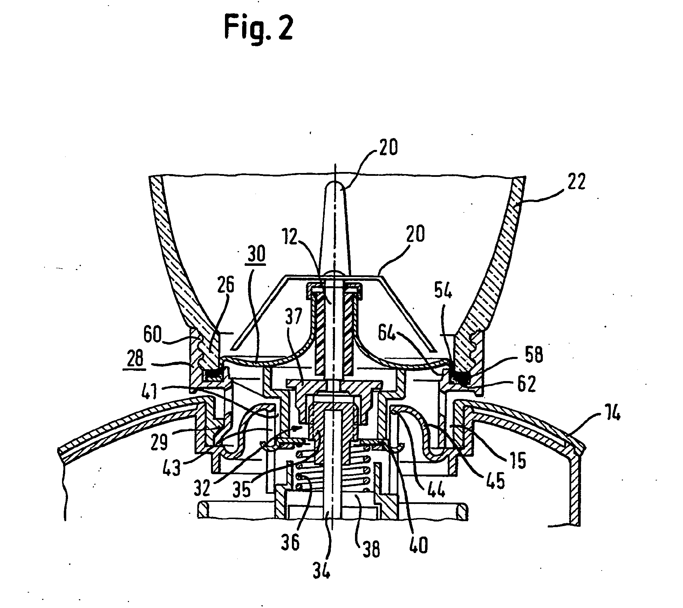

Figur 1 zeigt ein Küchengerät 10 in einer schematischen Schnittdarstellung. Im gezeigten Ausführungsbeispiel ist das Küchengerät 10 eine sog. Mischzerkleinerungsvorrichtung, die im Folgenden ebenfalls mit der Bezugsziffer 10 bezeichnet wird. Die Mischzerkleinerungsvorrichtung 10 weist eine rotierende Werkzeugwelle 12 auf und umfasst ein Gehäuse 14 mit einer darin angeordneten Antriebsvorrichtung, vorzugsweise einem elektrischen Antriebsmotor 16, sowie einem Bedienelement 18 zur Bedienung der Funktionen des Küchengeräts 10. Die Werkzeugwelle 12 mit daran angeordneten Messern 20 weist eine vertikale Drehachse auf und ragt in einen Becher 22, der in eine Aufnahme 15 auf einer Oberseite des Gehäuses 14 aufgesetzt und verriegelt ist und bei Bedarf hiervon abgenommen werden kann. Der Becher 22 weist einen offenen Bodenabschnitt 24 mit einem ringförmigen Bund 26 auf, der eine zylindrische Außenmantelfläche mit einem darauf befindlichen Außengewinde oder einer Bajonettpassung o. dgl. aufweist. Diese korrespondiert mit einem entsprechenden Innengewinde bzw. einer Gegenpassung einer Bajonettverriegelung eines Becherträgers 28. Der Becherträger 28 kann gemeinsam mit dem Becher 22 vom Gehäuse 14 abgenommen werden und dichtet in diesem Fall den offenen Bodenabschnitt 24 des Bechers 22 ab. Der Becher 22 ist gegen den Becherträger 28 mittels einer ringförmigen Dichtung 58 abgedichtet (vgl. Figur 2). Bei fest mit dem Becherträger 28 verbundenem Becher 22 bleibt die Werkzeugwelle 12 auch bei abgenommenem Becher 22 mit diesem verbunden, da die Werkzeugwelle 12 in einem Lagerschild 30 gelagert ist, der zwischen Becher 22 und Becherträger 28 fixiert ist. Der Becherträger 28 kann vorzugsweise mittels eines Bajonettverschlusses 29 in der Aufnahme 15 verriegelt werden.

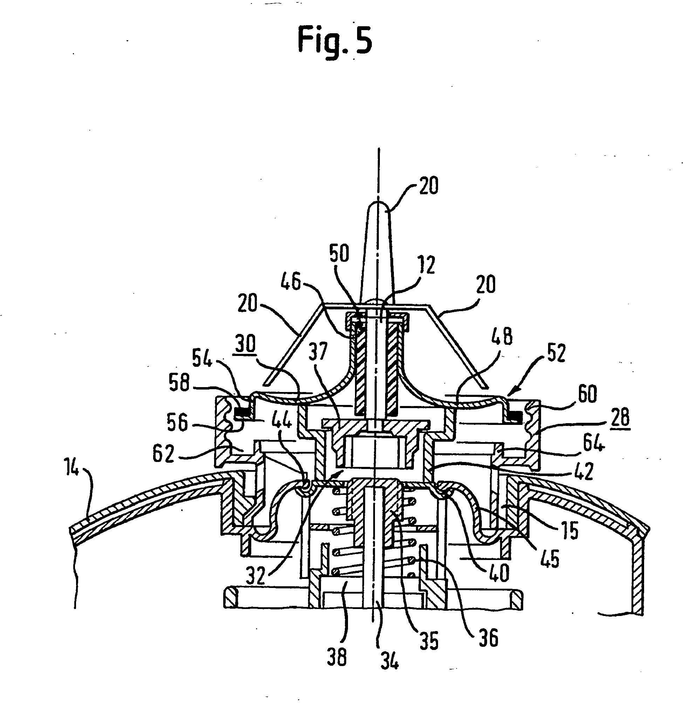

Die Figuren 2 und 5 verdeutlichen den Aufbau und das Zusammenwirken der wesentlichen Elemente einer Anlaufsicherung des Küchengeräts 10 in einem Detailschnitt. Sobald der Becher 22 vom Becherträger 28 abgenommen ist, liegt die Werkzeugwelle 12 mit den daran verankerten Messern 20 frei (vgl. Figur 5). Um zu verhindern, dass die rotierenden Messer 20 bei einer Berührung zu Verletzungen führen können, ist in diesem Fall der Antriebsmotor 16 von der Werkzeugwelle 12 entkoppelt. Zu diesem Zweck ist eine Kupplung 32 zwischen einer Abtriebswelle 34 des Antriebsmotors und der Werkzeugwelle 12 vorgesehen, die bei einer axialen Verschiebung der Werkzeugwelle 12 nach oben den Kraftschluss unterbricht. Eine konzentrisch um die Kupplung 32 angeordnete Feder 36 stützt sich einerseits an einem Gehäuseabsatz 38 und andererseits an einer axial beweglichen Abdeckung 40 ab, die über eine Hülse 42 mit dem Lagerschild 30 in Verbindung steht. Bei abgenommenem Becher 22 drückt die Feder 36 die Abdeckung 40 bis zu einem oberen Anschlag 44 nach oben, der Teil einer Gehäuseglocke 45 des Gehäuses 14 ist. Die auf der Abdeckung 40 aufsitzende Hülse 42 drückt den Lagerschild 30 so weit nach oben, dass die Kupplung 32 getrennt und die Werkzeugwelle 12 aus ihrem Eingriff mit der Abtriebswelle 34 des Antriebsmotors 16 gebracht ist.

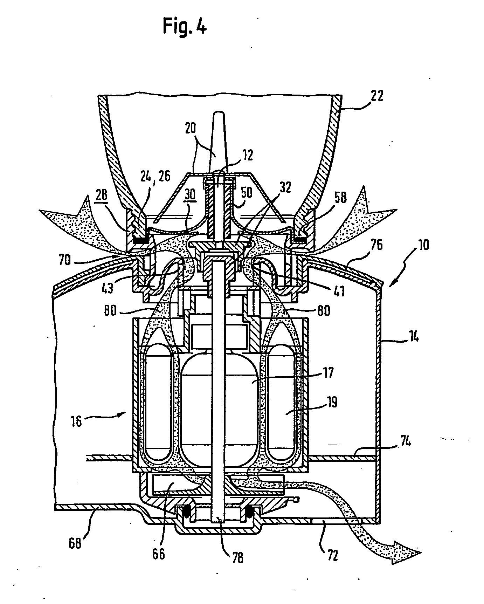

Ein zwischen der Gehäuseglocke 45 in der Aufnahme 15 und der Abdeckung 40 verbleibender Zwischenraum dient als verschließbare Öffnung 43, die bei abgenommenem Becherträger 28 bzw. bei abgenommenem Becher 22 verschlossen wird. Die Öffnung 43 dient zur Belüftung des Antriebsmotors 16, der bei einem geschlossenen Gehäuse 14 und länger andauerndem Betrieb einer zu starken Erwärmung unterliegen würde. Die Verlustwärme kann durch eine Ventilationseinrichtung abgeführt werden, die für eine Luftzufuhr durch die Öffnung 43 und eine Abfuhr der Luft nach unten (vgl. Figur 4) sorgt.

Der kreisrunde Lagerschild 30 weist eine dachförmige Kontur mit einem inneren, rohrförmigen Abschnitt 46 auf, in dessen abschnittsweise zylindrische Innenmantelfläche ein längliches Gleitlager als Wellenlager 50 eingesetzt ist, das eine axiale und radiale Lagerung für die Werkzeugwelle 12 bildet. Der Lagerschild 30 weist einen daran anschließenden schüsselförmigen mittleren Abschnitt 48 auf, an dessen Unterseite die Hülse 42 anliegt. Ein hieran anschließender ringförmiger äußerer Abschnitt 52 des Lagerschilds 30 ist gestuft ausgebildet, so dass ein Übergang des schüsselförmigen mittleren Abschnitts 48 zu einem kurzen hohlzylindrischen Abschnitt 54 gebildet ist. An dessen oberem Rand setzt mit kleinem Radius der äußere Rand des mittleren Abschnitts 48 an. Am unteren Rand des hohlzylindrischen Abschnitts 54 ist ein scheibenförmiger Ring 56 angesetzt, der eine Auflage für die Dichtung 58 bildet.

Bei auf den Becherträger 28 aufgesetztem Becher 22 ist dessen, mit einem Außengewinde versehener Bund 26 mit dem Innengewinde 60 des Becherträgers 28 verschraubt (Figur 2). Hierbei drückt die untere ringförmige Kante am Bund 26 des Bechers 22 den Ring 56 des Lagerschilds 30 gegen die Rückstellkraft der Feder 36 nach unten, bis der Ring 56 auf einem Grund einer Ringnut 62 des Schüsselträgers 28 aufliegt. Die ringförmige Dichtung 58 sorgt hierbei für die Abdichtung des Bechers 22 gegen den nach unten geschlossenen Becherträger 28.

Beim Aufsetzen des Bechers 22 wird gleichzeitig der Lagerschild 30 im Becherträger 28 zentriert. Dies erfolgt vorzugsweise durch eine Passung der Innenmantelfläche des hohlzylindrischen Abschnitts 54 auf einem Zentrierbund 64, der am inneren Radius der Ringnut 62 nach oben ragt und für einen passenden Sitz des Lagerschilds 30 sorgt. Die Zentrierung kann jedoch auch zwischen dem äußeren Umfang des Rings 56 und dem Innengewinde 60 des Becherträgers 28 erfolgen. Gleichzeitig bildet die Ringnut 62 einen Anschlag in axialer Richtung.

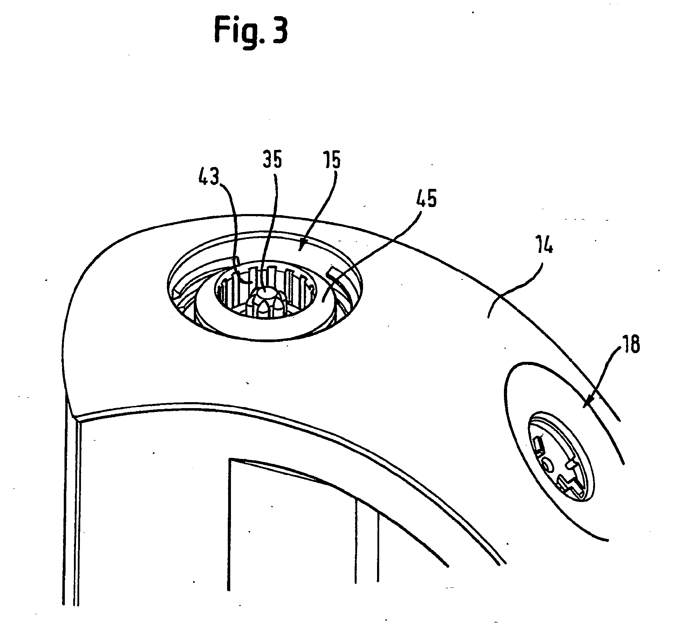

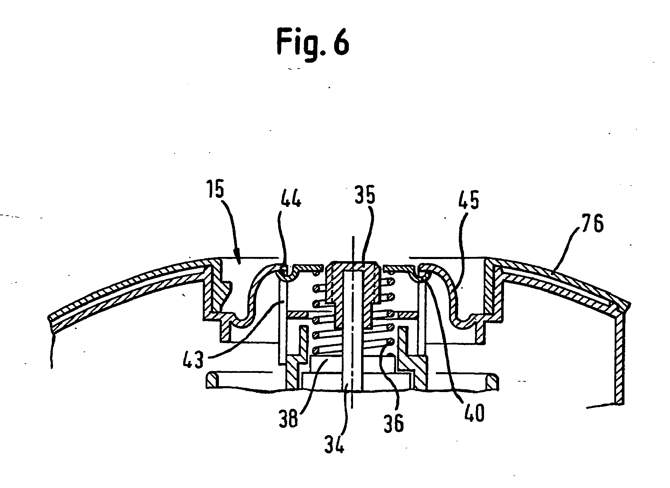

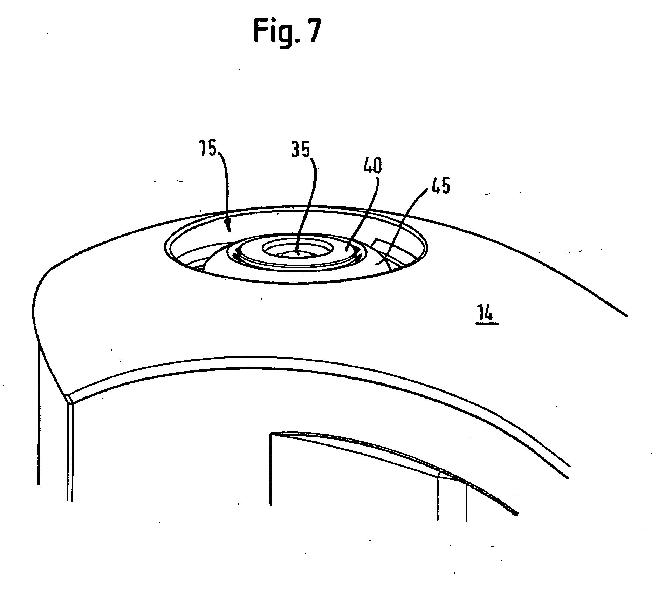

Um zu verhindern, dass bei abgenommenem Becher 22 Teile der Abtriebswelle 34 frei liegen und berührt werden können, drückt die Feder 36 die Abdeckung 40 zumindest so weit nach oben gegen den Anschlag 44 der Gehäuseglocke 45, dass eine mit der Abtriebswelle 34 des Antriebsmotors 16 verbundene Abtriebskupplung 35 nur noch stirnseitig frei liegt. Dieser Zustand ist anhand der Figuren 6 und 7 verdeutlicht. Figur 3 zeigt eine Detailansicht der offen liegenden Aufnahme 15 zum Einsetzen des Becherträger 28, bei der zur besseren Verdeutlichung die Abdeckung 40 an ihrem unteren Anschlag liegt. Hierdurch wird deutlich, dass ohne die nach oben drückende Abdeckung 40 Teile einer zylindrischen Außenmantelfläche der Abtriebskupplung 35 frei zugänglich wären. Die daran angeordneten Eingriffselemente, die mit einer Antriebskupplung 37 der Werkzeugwelle 12 in axialer Richtung in Eingriff gebracht werden können, liegen frei und können bei einer Rotation der Abtriebswelle 34 unter Umständen zu Verletzungen führen.

Wie anhand der Figur 3 deutlich gemacht wird, können die am zylindrischen Außenumfang der Abtriebskupplung 35 angeordneten Eingriffselemente insbesondere aus abgerundeten Stegen bestehen, die in hierzu passende Nuten in der Innenmantelfläche der Antriebskupplung 37 eingreifen können. Die Stege bzw. Nuten befinden sich vorzugsweise ausschließlich an den Mantelfläche der jeweiligen Kupplungen, so dass insbesondere die Stirnseite der Abtriebskupplung 35 keine Absätze oder Vorsprünge o. dgl. aufweist, die bei einer versehentlichen Berührung zu Verletzungen führen können.

Die erfindungsgemäße Anordnung zeichnet sich durch eine kompakte Bauweise aus, da die konzentrisch um die Abtriebswelle 34 angeordnete Feder 36 und die umhüllende Gehäuseglocke 45 keinen zusätzlichen Bauraum benötigen. Die wenigen bewegten Teile stellen eine zuverlässige und weitgehend störungsfreie Funktion sicher.

Durch die geschlossene Öffnung 43 kann keine Feuchtigkeit oder Schmutz in das Geräteinnere dringen. Zudem verdeutlicht die Figur 7 die relativ glattflächige und optisch ansprechende Gestaltung der Aufnahme 15 bei abgenommenem Becherträger 28.

Figur 4 verdeutlicht einen Kühlluftstrom 80 durch das Küchengerät 10, der zunächst das Wellenlager 50 der Werkzeugwelle 12, die Kupplung 32 und anschließend den Antriebsmotor 16 durchstreicht, bevor sie nach unten durch einen Luftauslass bzw. eine zusätzliche Öffnung 72 austritt. Der Kühlluftstrom 80 wird durch einen Ventilator 66 bewirkt, der auf einem unteren Wellenstumpf 78 der Motorwelle angeordnet ist. Der Ventilator 66 bewirkt eine Umlenkung einer axialen in eine radiale Strömung, indem er die Luft aus dem Motor 16 axial ansaugt und in radialer Richtung austreten lässt.

Zwischen Gehäusedeckel 76 und Schüsselträger 28 ist ein Spalt 70 als Lufteinlass vorgesehen, durch den die Luft angesaugt wird. Die Luft strömt unter den Lagerschild 30, der das Wellenlager 50 für die Werkzeugwelle 12 trägt und sorgt für eine ausreichende Wärmeabfuhr von diesem Gleitlager. Konzentrisch um die Kupplung 32 ist eine ringförmige Öffnung 43 angeordnet, die einen Kühlluftkanal zum Antriebsmotor 16 bildet. Durch diese Öffnung 43 tritt der Kühlluftstrom ein und kühlt dabei beim Vorbeistreichen die Kupplung 32, die aufgrund ihrer Elastizität eine Walkarbeit leistet und dabei erwärmt wird. Die immer noch relativ kühle Luft durchströmt anschließend den Antriebsmotor 16, wobei sich der Kühlluftstrom 80 ggf. zwischen vorhandenen Spalten, bspw. zwischen Stator 19 und Rotor 17 aufteilt, wie dies in Figur 4 angedeutet ist.

Unmittelbar unterhalb des Motors 16 sitzt der die Luft ansaugende Ventilator 66, der die Luft in radialer Richtung nach außen und durch eine zusätzliche Öffnung 72 drückt. Im gezeigten Ausführungsbeispiel ist die zusätzliche Öffnung 72 als Bodenöffnung im Gehäuseboden 68 ausgestaltet. Ggf. kann die zusätzliche Öffnung 72 mit einem Sieb oder Gitter (nicht dargestellt) versehen sein, damit keine Fremdkörper in den unteren Gehäusebereich eindringen und mit dem Ventilator 66 kollidieren können. Eine Trennwand 74 schottet den unteren Gehäusebereich gegen den weiter oben liegenden Bereich ab und verhindert eine Strömung der Kühlluft am Antriebsmotor 16 vorbei, da ansonsten Teile der durch die Öffnung 43 strömenden Luft unmittelbar vom Ventilator 66 angesaugt werden könnten, ohne die Spalten zwischen Rotor 17 und Stator 19 zu passieren.

Um zu verhindern, dass bei abgenommenem Becher 22 bzw. bei aus der Aufnahme 15 abgenommenem Becherträger 28 Fremdkörper in das Motorinnere gelangen können, ist die Öffnung 43 im Bereich um die Kupplung 32 verschließbar ausgestaltet. Die Figuren 5 und 6 verdeutlichen die Verschließbarkeit der Öffnung 43 bei abgenommenem Becherträger 28. Mit der am oberen Anschlag 44 anliegenden Abdeckung 40 wird die Öffnung 43 verschlossen, so dass das Gehäuseinnere zuverlässig gegen das Eindringen von Schmutz und/oder Feuchtigkeit geschützt ist. Zwischen dem Gehäuse 14 und der Abtriebskupplung 35 ist ein ringförmiger Spalt 41 ausgebildet. Auch die Abdeckung 40 ist ringförmig ausgebildet und in dem ringförmigen Spalt 41 koaxial zur Abtriebskupplung 35 von der geschlossenen Stellung in die geöffnete Stellung linear hin und her beweglich ist.

Die erfindungsgemäße Mischerzerkleinerungsvorrichtung 10 ist aufgrund der effektiven Kühlung aller sich im Betrieb erwärmenden Teile auch für einen Dauerbetrieb und eine harte Beanspruchung geeignet. Sowohl das Wellenlager 50 der Werkzeugwelle 12 als auch die typischerweise aus elastischem Kunststoff bestehende Kupplung 32 unterliegt je nach Betriebsbedingungen einer starken Beanspruchung und damit einer deutlichen Erwärmung. Diese Wärmeentwicklung kann mittels des entsprechend Figur 4 verlaufenden Kühlluftstroms 80 aus dem Gehäuse 14 abgeführt werden.

## Patentansprüche

1. Küchengerät mit
einem Gehäuse (14) und einem vom Gehäuse (14) abnehmbaren Becher (22), einem im Gehäuse (14) befindlichen Antriebsmotor (16),
einer im Becher (22) angeordneten und über eine Wellenlagerung (50) gelagerten Werkzeugwelle (12) einer Kupplung (32), die eine am Antriebsmotor (16) angeordnete Abtriebskupplung (35) und eine an der Werkzeugwelle (12) angeordnete und zur Abtriebskupplung (35) passende Antriebskupplung (37) hat, einem Kühlluftkanal mit einer am Gehäuse (14) vorgesehenen Öffnung (43), **dadurch gekennzeichnet, dass** eine Abdeckung (40) vorgesehen ist, die eine offene Stellung einnehmen kann, in der die Öffnung (43) offen ist, und die eine geschlossene Stellung einnehmen kann, in der die Öffnung (43) geschlossen ist, und dass die Abdeckung (40) durch das Einkuppeln der Antriebskupplung (37) mit der Abtriebskupplung (35) in die offene Stellung bringbar ist.

2. Küchengerät nach Anspruch 1, **dadurch gekennzeichnet, dass** die Abdeckung (40) durch eine Feder (36) in der geschlossenen Stellung vorgespannt gehalten wird.

3. Küchengerät nach Anspruch 1 oder 2, **dadurch gekennzeichnet, dass** durch die Kraft der Feder (36) die Antriebskupplung (37) in eine gegenüber der Abtriebskupplung (35) ausgekuppelte Stellung bringbar ist.

4. Küchengerät nach einem der Ansprüche 1 bis 3, **dadurch gekennzeichnet, dass** die Abdeckung (40) in der geschlossenen Stellung die Abtriebskupplung (35) abdeckt.

5. Küchengerät nach einem der voranstehenden Ansprüche, **dadurch gekennzeichnet, dass** in geöffneter Stellung der Abdeckung (40) der Kühlluftkanal zum Leiten von Kühlluft für den Antriebsmotor (16) und/oder die Kupplung (32) und/oder die Wellenlagerung (50) freigegeben wird.

6. Küchengerät nach einem der vorhergehenden Ansprüche, **dadurch gekennzeichnet, dass** die Öffnung (43) benachbart zur Abtriebskupplung (35) angeordnet ist.

7. Küchengerät nach einem der vorhergehenden Ansprüche, **dadurch gekennzeichnet, dass** am Antriebsmotor (16) ein Ventilator (66), der einen Kühlluftstrom (80) durch den Kühlluftkanal erzeugt.

8. Küchengerät nach einem der voranstehenden Ansprüche, **dadurch gekennzeichnet, dass** der Kühlluftkanal einen Spalt (70) zwischen einem Bodenabschnitt (24) des Bechers (22) und Gehäuse (14), und eine zur Öffnung (43) entfernte zusätzliche Öffnung (72) im Gehäuse (14) hat.

9. Küchengerät nach einem der voranstehenden Ansprüche, **dadurch gekennzeichnet, dass** die Kühlluft am Spalt (70) eintritt, am Wellenlager (50) und an der Kupplung (32) vorbei geführt wird, über die Öffnung (43) ins Innere des Gehäuses (14) eintritt, durch den Antriebsmotor (16) strömt und über die zusätzliche Öffnung (72) wieder aus dem Gehäuse (14) austritt.

10. Küchengerät nach einem der voranstehenden Ansprüche, **dadurch gekennzeichnet, dass** der Becher (22) einen Becherträger (28) und einen das Wellenlager (50) tragenden Lagerschild (30) hat, wobei der Becherträger (28) über eine Verschlusseinrichtung, bevorzugt einen Bajonettverschluss am Gehäuse (14) montierbar ist.

11. Küchengerät nach einem der voranstehenden Ansprüche, **dadurch gekennzeichnet, dass** der Becher (22) am Becherträger (28) über eine Verbindungseinrichtung, bevorzugt ein Gewinde, montierbar ist und bei auf dem Becherträger (28) montiertem Becher (22) zwischen dem Becher (22) und dem Becherträger (28) der Lagerschild (30) angeordnet ist.

12. Küchengerät nach einem der voranstehenden Ansprüche, **dadurch gekennzeichnet, dass** bei am Gehäuse (14) montiertem Becherträger (28) und nicht am Becherträger (28) montiertem Becher (22) der Lagerschild (30) mit Lagerwelle (12) und der Antriebskupplung (37) mittels der vorgespannten Abdeckung (40) derart bewegt wird, dass die Antriebskupplung (37) von der Abtriebskupplung (35) entkuppelt wird.

13. Küchengerät nach einem der voranstehenden Ansprüche, **dadurch gekennzeichnet, dass** zwischen dem Gehäuse (14) und der Abtriebskupplung (35) ein ringförmiger Spalt (41) ausgebildet ist und dass die Abdeckung (40) ringförmig ausgebildet ist und in dem ringförmigen Spalt (41) koaxial zur Abtriebskupplung (35) von der geschlossenen Stellung in die geöffnete Stellung linear hin und her beweglich ist.

14. Küchengerät nach einem der voranstehenden Ansprüche, **dadurch gekennzeichnet, dass** die Abdeckung (40) in der geschlossenen Stellung einen Anschlag hat und bündig zum benachbarten Gehäuseabschnitt und/oder zum stirnseitigen Ende der Abtriebskupplung (35) positioniert ist.

## Claims

1. Kitchen appliance with a housing (14) and a beaker (22) removable from the housing (14), a drive motor (16) disposed in the housing (14), a tool shaft (12), which is arranged in the beaker (22) and mounted by way of a shaft bearing (50), of a coupling (32), which has a driven coupling (35) arranged at the drive motor (16) and a drive coupling (37) arranged at the tool shaft (12) and adapted to the driven coupling (35), and a cooling air channel with an opening (43) provided at the housing (14), **characterised in that** a cover (40) is provided, which can adopt an open setting in which the opening (43) is open and can adopt a closed setting in which the opening (43) is closed, and that the cover (40) can be brought into the open setting by coupling the drive coupling (37) with the driven coupling (35).

2. Kitchen appliance according to claim 1, **characterised in that** the cover (40) is held by a spring (36) to be biased into the closed setting.

3. Kitchen appliance according to claim 1 or 2, **characterised in that** the drive coupling (27) can be brought by the force of the spring (26) into the setting uncoupled relative to the driven coupling (35).

4. Kitchen appliance according to one of claims 1 to 3, **characterised in that** the cover (40) in the closed setting covers the driven coupling (25).

5. Kitchen appliance according to one of the preceding claims, **characterised in that** in the opened setting of the cover (40) the cooling air channel is freed for guidance of cooling air for the drive motor (16) and/or the coupling (32) and/or the shaft bearing (50).

6. Kitchen appliance according to one of the preceding claims, **characterised in that** the opening (43) is arranged adjacent to the driven coupling (35).

7. Kitchen appliance according to one of the preceding claims, **characterised in that** a fan (66) producing a cooling air flow (80) through the cooling air channel [is arranged] at the drive motor (16).

8. Kitchen appliance according to one of the preceding claims, **characterised in that** the cooling air channel has a gap (70) between a base section (24) of the beaker (22) and housing (14) and an additional opening (72), which is spaced from the opening (43), in the housing (14).

9. Kitchen appliance according to one of the preceding claims, **characterised in that** the cooling air enters the gap (70), is led past the shaft bearing (50) and the coupling (22), enters the interior of the housing (14) by way of the opening (43), flows through the drive motor (16) and again exits the housing (14) by way of the additional opening (72).

10. Kitchen appliance according to one of the preceding claims, **characterised in that** the beaker (22) has a beaker carrier (28) and a bearing plate (30) carrying the shaft bearing (50), wherein the beaker carrier (28) can be mounted on the housing (14) by way of a locking device, preferably a bayonet lock.

11. Kitchen appliance according to one of the preceding claims, **characterised in that** the beaker (22) can be mounted on the beaker carrier (28) by way of a connecting device, preferably a thread, and when the beaker (22) is mounted on the beaker carrier (28) the bearing plate (30) is arranged between the beaker (22) and the beaker carrier (28).

12. Kitchen appliance according to one of the preceding claims, **characterised in that** when the beaker carrier (28) is mounted at the housing (14) and the beaker (22) is not mounted on the beaker carrier (28) the bearing plate (30) together with the bearing shaft (12) and the drive coupling (37) is moved by means of the biased cover (40) in such a manner that the drive coupling (37) is uncoupled from the driven coupling (35).

13. Kitchen appliance according to one of the preceding claims, **characterised in that** an annular gap (41) is formed between the housing (14) and the driven coupling (25) and that the cover (40) is of annular construction and is linearly movable back and forth in the annular gap (41) coaxially with respect to the driven coupling (35) from the closed setting to the opened setting.

14. Kitchen appliance according to one of the preceding claims, **characterised in that** the cover (40) in the closed setting has an abutment and is positioned flushly with respect to the adjacent housing section and/or with respect to the end of the driven coupling (25) at the end face.

## Revendications

1. Ustensile de cuisine avec
un boîtier (14) et un bol (22) pouvant être retiré du boîtier (14),
un moteur de commande (16) se trouvant dans le boîtier (14),
un arbre d'outil (12), placé dans le bol (22) et monté sur un palier d'arbre (50), d'un dispositif d'accouplement (32) ayant un accouplement de sortie (35) placé sur le moteur de commande (16) et un accouplement de commande (37) placé sur l'arbre d'outil (12) et correspondant à l'accouplement de sortie (35),
un canal d'air de refroidissement avec un orifice (43) prévu sur le boîtier (14), **caractérisé en ce qu'**un cache (40) est prévu, qui peut prendre une position ouverte dans laquelle l'orifice (43) est ouvert, et qui peut prendre une position fermée dans laquelle l'orifice (43) est fermé,
et **en ce que** le cache (40) peut être amené dans la position ouverte en couplant l'accouplement de commande (37) avec l'accouplement de sortie (35).

2. Ustensile de cuisine selon la revendication 1, **caractérisé en ce que** le cache (40) est maintenu précontraint dans la position fermée grâce à un ressort (36).

3. Ustensile de cuisine selon la revendication 1 ou 2, **caractérisé en ce que** grâce à la force du ressort (36), l'accouplement de commande (37) peut être amené dans une position découplée par rapport à l'accouplement de sortie (35).

4. Ustensile de cuisine selon l'une des revendications 1 à 3, **caractérisé en ce que** le cache (40) en position fermée recouvre l'accouplement de sortie (35).

5. Ustensile de cuisine selon l'une des revendications précédentes, **caractérisé en ce qu'**en position ouverte du cache (40), le canal d'air de refroidissement destiné à véhiculer l'air de refroidissement pour le moteur de commande (16) et/ou le dispositif d'accouplement (32) et/ou le palier d'arbre (50) est libéré.

6. Ustensile de cuisine selon l'une des revendications précédentes, **caractérisé en ce que** l'orifice (43) est disposé de manière contiguë à l'accouplement de sortie (35).

7. Ustensile de cuisine selon l'une des revendications précédentes, **caractérisé en ce qu'**un ventilateur (66) est monté sur le moteur de commande (16), et qui produit un courant d'air de refroidissement (80) à travers le canal d'air de refroidissement.

8. Ustensile de cuisine selon l'une des revendications précédentes, **caractérisé en ce que** le canal d'air de refroidissement a un espace (70) entre une partie inférieure (24) du bol (22) et le boîtier (14), et un orifice supplémentaire (72) dans le boîtier (14), éloigné de l'orifice (43).

9. Ustensile de cuisine selon l'une des revendications précédentes, **caractérisé en ce que** l'air de refroidissement entre au niveau de l'espace (70), passe devant le palier d'arbre (50) et le dispositif d'accouplement (32), entre par l'orifice (43) à l'intérieur du boîtier (14), traverse le moteur de commande (16) et ressort du boîtier (14) par l'orifice supplémentaire (72).

10. Ustensile de cuisine selon l'une des revendications précédentes, **caractérisé en ce que** le bol (22) a un support de bol (28) et un flasque de palier (30) portant le palier d'arbre (50), le support de bol (28) pouvant être monté sur le boîtier (14) par un dispositif de verrouillage, de préférence un verrouillage à baïonnette.

11. Ustensile de cuisine selon l'une des revendications précédentes, **caractérisé en ce que** le bol (22) peut être monté sur le support de bol (28) par un système d'assemblage, de préférence un filetage, et quand le bol (22) est monté sur le support de bol (28), le flasque de palier (30) est placé entre le bol (22) et le support de bol (28).

12. Ustensile de cuisine selon l'une des revendications précédentes, **caractérisé en ce que** quand le support de bol (28) est monté sur le boîtier (14) et le bol (22) n'est pas monté sur le support de bol (28), le flasque de palier (30) avec l'arbre de palier (12) et l'accouplement de commande (37) est déplacé au moyen du cache précontraint (40) de manière à découpler l'accouplement de commande (37) de l'accouplement de sortie (35).

13. Ustensile de cuisine selon l'une des revendications précédentes, **caractérisé en ce qu'**un espace annulaire (41) est formé entre le boîtier (14) et l'accouplement de sortie (35) et **en ce que** le cache (40) est de forme annulaire et peut passer dans l'espace annulaire (41), coaxialement à l'accouplement de sortie (35), de la position fermée à la position ouverte en un mouvement linéaire de va-et-vient.

14. Ustensile de cuisine selon l'une des revendications précédentes, **caractérisé en ce que** le cache (40) en position fermée a une butée et est positionné au même niveau que la partie contiguë de boîtier et/ou l'extrémité frontale de l'accouplement de sortie (35).
